# FASCICULE DE BREVET EUROPEEN

(11) **EP 3 902 705 B1**
(45) Date de publication et mention de la délivrance du brevet: **24.04.2024**
(21) Numéro de dépôt: 19848980.9
(22) Date de dépôt: 23.12.2019
(51) Int. Cl.: B60P 7/13

(54) **SYSTÈME DE VERROUILLAGE D'UN SYSTÈME EMBARQUÉ DE TRANSPORT DE MARCHANDISES ET VÉHICULE AUTOMOBILE ÉQUIPÉ D'UN TEL SYSTÈME DE VERROUILLAGE**
VERRIEGELUNGSSYSTEM FÜR EIN BORDEIGENES WARENTRANSPORTSYSTEM UND MIT SOLCH EINEM VERRIEGELUNGSSYSTEM AUSGESTATTETES KRAFTFAHRZEUG
LOCKING SYSTEM FOR AN ON-BOARD GOODS TRANSPORT SYSTEM AND MOTOR VEHICLE PROVIDED WITH SUCH A LOCKING SYSTEM

(30) Priorité: 27.12.2018 FR 1874198
(43) Date de publication de la demande: 03.11.2021
(73) Titulaire: Renault s.a.s, 92100 Boulogne Billancourt (FR); Container Quick Lock NV, 2900 Schoten (BE)
(72) Inventeur: BAUDLOT, François, 78180 Montigny le Bretonneux (FR); MONTANARI, Laurence, 92320 Chatillon (FR); RENAUX, Bernard, 88350 Liffol-le-Grand (FR); BENSCHOP, Leendert Johannes Marinus, 3413 Jaarsveld (NL); DER-WEDUWE, Paul, 1913 Luxembourg (LU)
(74) Mandataire: Fédit-Loriot
(86) Numéro de dépôt international: PCT/FR2019/053277
(87) Numéro de publication internationale: WO 2020/136341

(56) Documents cités:
- WO-A1-2011/071384
- US-A1- 2013 251 473
- US-A1- 2018 273 177

## Description

L'invention concerne un système de verrouillage d'un système embarqué de transport de marchandises, en particulier pour le verrouiller à un véhicule automobile de transport et de livraison, notamment un véhicule électrique. L'invention concerne également un véhicule automobile équipé d'un tel système de verrouillage.

Actuellement, les livraisons de marchandises en milieu urbain sont réalisées par des camions ou fourgonnettes. Certains véhicules dédiés à la livraison sont équipés d'un plateau sur lequel reposent directement les marchandises, ces dernières, éventuellement rangées dans des conteneurs de petites dimensions, peuvent être maintenues par des sangles, voire attachées par des chaînes cadenassées. Si leur accès est aisé, il faut intervenir au niveau de chaque marchandise (ou conteneur) pour la sécuriser, ce qui prend du temps. D'autres véhicules dédiés à la livraison sont équipés d'un espace de rangement en général fermé. Si l'accès aux marchandises est davantage sécurisé, il est en général moins aisé. De tels véhicules ne sont par ailleurs pas toujours adaptés pour des livraisons dans des rues étroites.

Il existe donc un besoin pour un système de fixation et de verrouillage de marchandises, à un véhicule, en particulier placées dans un système embarqué de transport, par exemple un conteneur, qui soit simple et sécurisé. Il existe des systèmes de verrouillage utilisés pour verrouiller des conteneurs (ou containers) de marchandises de dimensions normalisées sur des bateaux ou autres véhicules de transport. Certains de ces systèmes sont des systèmes de verrou tournant, tel que le Twist lock^{®}, dont le verrouillage est obtenu suite à une rotation à 90°C. Il existe d'autres systèmes de verrouillage dont le verrouillage est obtenu au moyen d'un mécanisme à ciseaux, décrits par exemple dans les documents EP1937511B2 et EP2910421A2. Ces documents décrivent des moyens de verrouillage mobiles entre une position ouverte dans laquelle ils peuvent passer librement par une ouverture d'une paroi d'un coin d'un conteneur et une position fermée dans laquelle ils s'accrochent derrière la paroi d'un coin du conteneur entourant l'ouverture. Le passage entre les positions ouverte et fermée est obtenu par un mécanisme à ciseaux. Le système de verrouillage décrit dans le document EP1937511B2 permet un verrouillage automatique lors de la mise en appui du coin du conteneur sur le verrou. Un système de blocage bloque le verrou en position fermée et peut être facilement actionné par une manette pour libérer le verrou et permettre son ouverture.

De tels systèmes sont efficaces pour des conteneurs lourds et encombrants tels que ceux respectant la norme ISO, mais peuvent se révéler insuffisants pour des applications à la fixation de conteneurs de plus petites dimensions et plus légers. Notamment, il est facile d'accéder au système de verrouillage, de le débloquer et d'ôter le conteneur.

Le document WO 2011/071384 A1 divulgue également un système de verrouillage selon l'art antérieur.

Il existe donc un besoin pour un système de verrouillage d'un système embarqué, par exemple un conteneur, qui soit sécurisé, en particulier contre les vols, qui puisse être actionné automatiquement, notamment à distance et qui soit aussi adapté pour des systèmes embarqués, notamment des conteneurs, de dimensions réduites par rapport aux conteneurs de norme ISO.

A cet effet, un premier objet de l'invention concerne un système de verrouillage pour le verrouillage d'une ferrure d'un système embarqué, notamment un conteneur, comprenant :
des organes de verrouillage déplaçables entre une position ouverte dans laquelle ils peuvent traverser librement une ouverture d'une paroi de la ferrure du système embarqué suivant une direction d'insertion et une position fermée dans laquelle ils sont verrouillés par rapport à l'ouverture, notamment accrochés derrière une portion de la paroi de la ferrure du système embarqué entourant cette ouverture,
un mécanisme de verrouillage relié aux organes de verrouillage, mobile entre une première position dans laquelle les organes de verrouillage sont dans la position ouverte et une deuxième position dans laquelle les organes de verrouillage sont dans la position fermée.

Selon l'invention, le système de verrouillage comprend en outre au moins un actionneur et des organes de couplage couplant ledit au moins un actionneur au mécanisme de verrouillage de sorte que, dans un mode de fonctionnement, l'actionneur coopère avec les organes de couplage pour déplacer le mécanisme de verrouillage au moins de la première position vers la deuxième position.

Par « mode de fonctionnement » on entend un état dans lequel l'actionneur reçoit une énergie et la convertit en un mouvement. Le déplacement des organes de verrouillage est ainsi obtenu via l'actionnement de l'actionneur, de sorte que le verrouillage du système peut ainsi être obtenu de manière simple et sûre.

On peut en outre prévoir que, dans un mode de fonctionnement, l'actionneur coopère avec les organes de couplage pour déplacer le mécanisme de verrouillage de la deuxième position vers la première position, pour un déverrouillage aisé du système.

En variante, ou en combinaison, l'actionneur et les organes de couplage pourraient être agencés pour être découplés afin de permettre un déverrouillage du système, notamment manuel.

Dans un mode de réalisation, le système de verrouillage peut comprendre des moyens de blocage du mécanisme de verrouillage dans une moins une position choisie parmi les première et deuxième positions, de préférence au moins dans la position fermée. Ces moyens de blocage peuvent comprendre un ou plusieurs éléments mécaniques de blocage du système de verrouillage dans la position ouverte ou fermée, un mode d'arrêt de l'actionneur dans lequel il coopère avec les organes de couplage pour bloquer tout mouvement du mécanisme de verrouillage, voire les deux.

Ainsi, avantageusement, l'actionneur, dans au moins un mode d'arrêt, peut coopérer avec les organes de couplage pour bloquer le mécanisme de verrouillage dans une moins une position choisie parmi les première et deuxième positions. Ceci permet de sécuriser de manière simple et sûre le système de verrouillage dans une position ouverte ou fermée, voire dans chacune de ces positions, mais de préférence au moins dans la position fermée. Ce mode d'arrêt peut correspondre à un mode dans lequel l'actionneur est ou n'est pas alimenté en énergie, de préférence n'est pas alimenté en énergie, en particulier lorsque l'actionneur est un actionneur électrique.

Avantageusement, le système de verrouillage peut comporter des organes de sollicitation sollicitant le mécanisme de verrouillage vers la première position ou sollicitant les organes de verrouillage vers la position ouverte. Ceci permet de faciliter le déverrouillage. En particulier, ces organes de sollicitation peuvent comprendre un accumulateur pour stocker une partie de l'énergie fournie par l'actionneur durant le déplacement du mécanisme de verrouillage de la première position vers la deuxième position, cet accumulateur délivrant l'énergie accumulée lors du déplacement du mécanisme de verrouillage de la première position vers la deuxième position. Un tel accumulateur peut être un ressort ou tout autre élément déformable, tel que par exemple un accumulateur hydraulique ou pneumatique.

L'actionneur peut être un actionneur linéaire ou rotatif, générant un mouvement linéaire ou rotatif.

Avantageusement, l'actionneur peut être choisi parmi un actionneur électrique, pneumatique ou hydraulique. Toutefois, de préférence, l'actionneur peut être un actionneur électrique, ce qui permet de simplifier la réalisation du système de verrouillage et son alimentation en énergie et de réaliser un système de verrouillage compact. L'actionneur électrique peut être choisi parmi un moteur rotatif et un moteur linéaire, de préférence un moteur rotatif. Il peut notamment s'agir d'un moteur pas à pas.

Avantageusement, le système de verrouillage peut comprendre un boîtier, le mécanisme de verrouillage étant placé au moins en partie à l'intérieur d'un logement du boîtier. En particulier, les organes de couplage ainsi que l'actionneur peuvent être agencés à l'intérieur du boîtier. Un système relativement compact peut alors être obtenu. Avantageusement, les organes de verrouillages peuvent être en dehors du boîtier, notamment dans chacune des première et deuxième positions.

Dans un mode de réalisation, le boîtier peut présenter au moins une ouverture située en regard d'au moins un élément choisi parmi les organes de couplage et l'actionneur. Ceci peut permettre un accès aisé aux organes de couplage, à l'actionneur, voire aux deux, pour des opérations de maintenance, ou pour actionner manuellement les organes de couplage, ou encore découpler manuellement les organes de couplage de l'actionneur en cas de dysfonctionnement de ce dernier ou d'un défaut d'alimentation en énergie de ce dernier. La ou les ouvertures peuvent être fermées par des plaques fixées au boîtier de manière démontable, par exemple par des vis.

Dans un mode de réalisation, le mécanisme de verrouillage peut être agencé par rapport au boîtier de manière à suivre un mouvement de translation ou de rotation entre les première et deuxième positions.

Les organes de couplage peuvent alors simplement transmettre le mouvement de l'actionneur au mécanisme de verrouillage ou le transmettre avec transformation.

Autrement dit, les organes de couplage peuvent comprendre un ou plusieurs organes, notamment mécaniques, choisis parmi des organes de transmission d'un mouvement rotatif ou linéaire et des organes de transformation d'un mouvement rotatif ou linéaire en mouvement linéaire ou rotatif.

Des systèmes de transmission de mouvement sont par exemple des systèmes roue et vis sans fin, des systèmes à roues de friction, des systèmes de coins, des systèmes manivelle-bielle-manivelle, des systèmes d'engrenages, des systèmes poulies et courroie, des systèmes chaîne et roues dentées, des systèmes came et galet. Des systèmes de transformation de mouvement sont par exemple des systèmes manivelle et coulisse, des systèmes bielle et manivelle, des systèmes vis et écrou, des systèmes pignon et crémaillère, des systèmes vis et crémaillère, des systèmes came et galet. Les organes de couplage peuvent ainsi comprendre un ou plusieurs éléments choisis parmi les systèmes listés ci-dessus. Ils pourront être choisis en fonction du mouvement généré par l'actionneur (rotatif ou linéaire) et du mouvement à appliquer au mécanisme de verrouillage pour le déplacer entre les première et deuxième positions.

On notera qu'en cas de transmission d'un mouvement linéaire, les organes de couplage peuvent être de simples surfaces de guidage en contact avec des éléments du mécanisme de verrouillage.

Dans un mode de réalisation avantageux, un système de poulies et courroie peut être mis en oeuvre, ce qui peut faciliter la manipulation du système de verrouillage en cas de panne de l'actionneur ou de dégradation de la courroie. On peut en effet alors prévoir un accès aisé aux organes de couplage, et notamment aux poulies, afin de pouvoir les actionner manuellement si besoin.

Dans un mode de réalisation, le mécanisme de verrouillage peut comprendre un mécanisme à ciseaux dans lequel deux branches se croisent à l'emplacement d'un pivot d'axe perpendiculaire à la direction d'insertion, le mécanisme de verrouillage coopérant avec au moins une surface du boîtier de sorte que, lors d'un déplacement entre les première et deuxième positions, le pivot suive par rapport au boîtier un mouvement choisi parmi une translation et une rotation, de préférence une translation. Les organes de couplage couplent alors le pivot à l'actionneur. Le mouvement de l'actionneur peut ainsi être transmis au pivot par les organes de couplage, après transformation le cas échéant. Un tel mécanisme présente l'avantage d'être simple et robuste.

A cet effet, le pivot peut notamment être monté à coulissement à l'intérieur du boîtier. Il peut par exemple traverser une ou plusieurs fentes prévues à cet effet, dont la forme pourra être oblongue ou en arc de cercle selon le mouvement suivi par le pivot.

Avantageusement, des extrémités des deux branches situées d'un même côté du mécanisme de verrouillage peuvent former les organes de verrouillage.

Dans un mode de réalisation, le système peut comprendre un unique actionneur rotatif dont l'axe de rotation s'étend parallèlement à l'axe du pivot. Ceci permet de réaliser un système de verrouillage particulièrement compact. Notamment, l'actionneur peut être disposé sous le mécanisme de verrouillage, d'un côté opposé aux organes de verrouillage. L'actionneur peut alors être couplé au pivot par les organes de couplage, par exemple un système de poulie-courroie et de roues et poulies excentriques. A titre d'exemple, une courroie peut relier une poulie solidaire de l'axe de rotation de l'actionneur rotatif à une poulie excentrique solidaire de l'axe du pivot du mécanisme de verrouillage, par exemple via une roue excentrique.

Un autre objet de l'invention concerne un véhicule automobile comportant un plateau de chargement, au moins une source d'énergie et au moins un système de verrouillage selon l'invention solidaire du plateau, l'actionneur de chaque système de verrouillage étant alimenté en énergie par ladite au moins une source d'énergie. Le verrouillage d'un système embarqué, notamment un conteneur, sur le plateau de chargement peut ainsi être obtenu de manière simple et rapide. On pourra prévoir un, deux ou plus systèmes de verrouillage par système embarqué selon les dimensions de celui-ci, de préférence, de un à quatre.

La source d'énergie peut être choisie en fonction de la nature de l'actionneur. Il peut notamment s'agir d'une batterie d'alimentation électrique ou de circuits hydraulique ou pneumatique comprenant par exemple un réservoir de fluide et une pompe. De préférence, l'actionneur est électrique et le véhicule équipé d'au moins une batterie.

Dans un mode de réalisation, au moins un système de commande dudit au moins un système de verrouillage, notamment distant de ce dernier, peut être prévu. Un tel système de commande peut notamment être agencé pour placer l'actionneur d'un système de verrouillage dans les modes de fonctionnement ou d'arrêt précédemment mentionnés.

Avantageusement, un unique système de commande pour les différents systèmes de verrouillage peut être prévu. Ce système de commande peut-être relié aux différents systèmes de verrouillage par des câbles, Il peut alors être disposé à l'intérieur de l'habitacle du véhicule, par exemple dans le poste de conduite, ou communiquer avec les différents systèmes de verrouillage via des systèmes de communication sans fil, il peut alors être dissocié du véhicule.

Dans un mode de réalisation, chaque système de verrouillage peut en outre être fixé au plateau de manière démontable. On peut ainsi prévoir différents emplacements de fixation du ou des systèmes de verrouillage sur le plateau en fonction des dimensions des systèmes embarqués que l'on souhaite fixer.

Dans un mode de réalisation, le véhicule automobile est un véhicule électrique. De préférence, l'actionneur de chaque système de verrouillage est alors un actionneur électrique.

Quelque soit le mode de réalisation, le véhicule automobile peut comprendre au moins un capteur de détection de la position des organes de verrouillage de chaque système de verrouillage relié à un système de commande du véhicule, le système de commande du véhicule étant configuré pour interdire le démarrage du véhicule lorsqu'un capteur indique qu'un système de verrouillage est dans une position ouverte ou n'est pas dans une position fermée.

L'invention est maintenant décrite en référence aux dessins annexés, non limitatifs, dans lesquels :
la figure 1 est une vue en perspective d'un système de verrouillage selon un mode de réalisation dans un état ouvert,
la figure 2 est une vue en coupe et en perspective, partiellement éclatée, du système de verrouillage de la figure 1,
la figure 3 est une vue en coupe et en perspective du système de verrouillage des figures 1 et 2 dans la position ouverte,
la figure 4 est une vue similaire à la figure 3, le système de verrouillage étant dans la position fermée,
la figure 5 est une vue en coupe selon la ligne AA de la figure 2,
la figure 6 est une vue de côté du système de verrouillage dans la position ouverte,
la figure 7 est une vue similaire à la figure 6, dans la position fermée,
la figure 8 représente un véhicule automobile équipé de systèmes de verrouillage selon l'invention.

Dans la présente description, les termes avant, arrière, supérieur, inférieur, font référence aux directions avant et arrière du véhicule, lorsque le système de verrouillage est monté sur le véhicule. Les axes X, Y, Z, correspondent respectivement à l'axe longitudinal (d'avant en arrière), transversal et vertical du véhicule, ce dernier reposant sur le sol. La direction verticale correspond ainsi à la direction de la gravité.

Par sensiblement horizontal, longitudinal ou vertical, on entend une direction/un plan formant un angle d'au plus d'au plus 10° ou d'au plus 5°, avec une direction/un plan horizontal, longitudinal ou vertical.

Par sensiblement parallèle, perpendiculaire ou à angle droit, on entend une direction/un angle s'écartant d'au plus 10° ou d'au plus 5° d'une direction parallèle, perpendiculaire ou d'un angle droit.

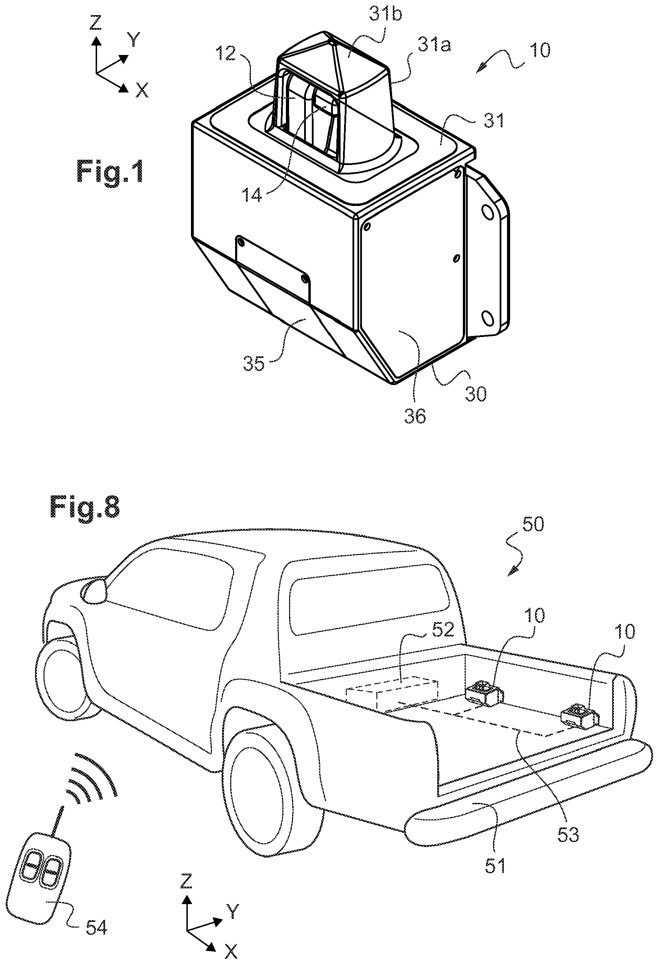

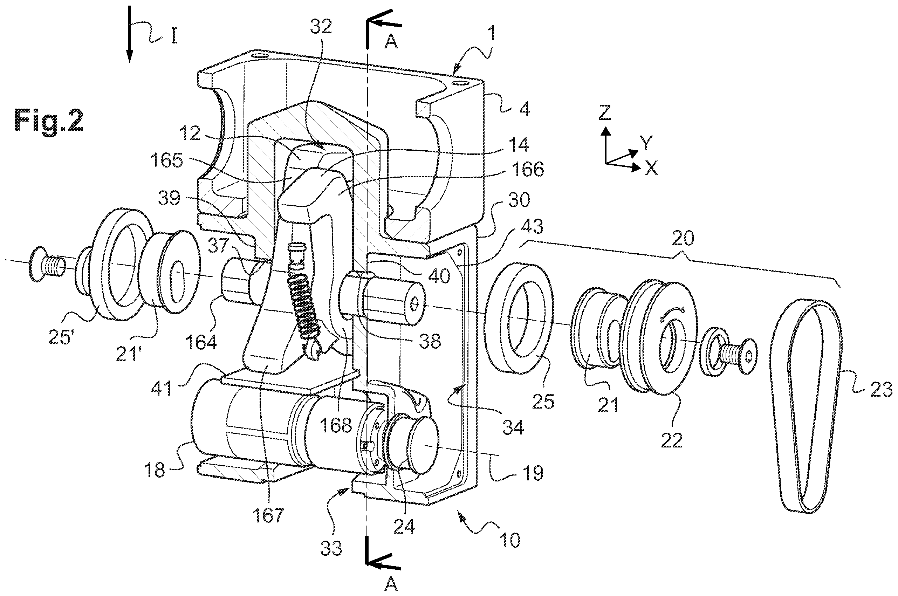

Les figures 1 à 7 représentent un système de verrouillage 10 pour le verrouillage d'un conteneur 1, partiellement représenté sur les figures 2 à 4.

Tel que visible particulièrement sur les figures 2 à 7, le système de verrouillage 10 représenté comprend des organes de verrouillage 12, 14, un mécanisme de verrouillage 16, un actionneur 18 et des organes de couplage 20.

Les organes de verrouillage 12, 14 sont déplaçables entre une position ouverte (fig.1, 3, 5, 6) et une position fermée (fig.2, 4, 7). Dans la position ouverte, les organes de verrouillage 12, 14 peuvent traverser librement une ouverture 2 d'une paroi 3 faisant partie d'une ferrure 4 d'un système embarqué, notamment un conteneur 1, notamment suivant une direction d'insertion I, ici sensiblement verticale.

L'expression « système embarqué » désigne tout type de chargement susceptible d'être monté sur le véhicule, ou déchargé. Un système embarqué est typiquement un conteneur ayant une enceinte fermée, et cet exemple de réalisation sera principalement décrit dans la description. Toutefois l'invention s'applique à tout type de système embarqué, par exemple à un équipement quelconque monté sur une structure ou un châssis, cette structure ou châssis étant fixée de façon réversible au véhicule via le système de verrouillage selon l'invention. Dans la suite de la description on se référera par défaut à l'exemple d'un conteneur, étant entendu que ce qui est décrit peut également s'appliquer à un autre type de système embarqué sans sortir du cadre de l'invention.

La ferrure 4 peut être formée d'une paroi du conteneur ou d'une pièce de fixation fixée à une paroi du conteneur, cette pièce de fixation pouvant en outre également former un pied de support pour le conteneur. Dans la position fermée, les organes de verrouillage 12, 14 sont verrouillés par rapport à l'ouverture 2. Notamment, dans cette position fermée, les organes de verrouillage 12, 14 s'accrochent derrière la portion de la paroi 3 entourant cette ouverture 2.

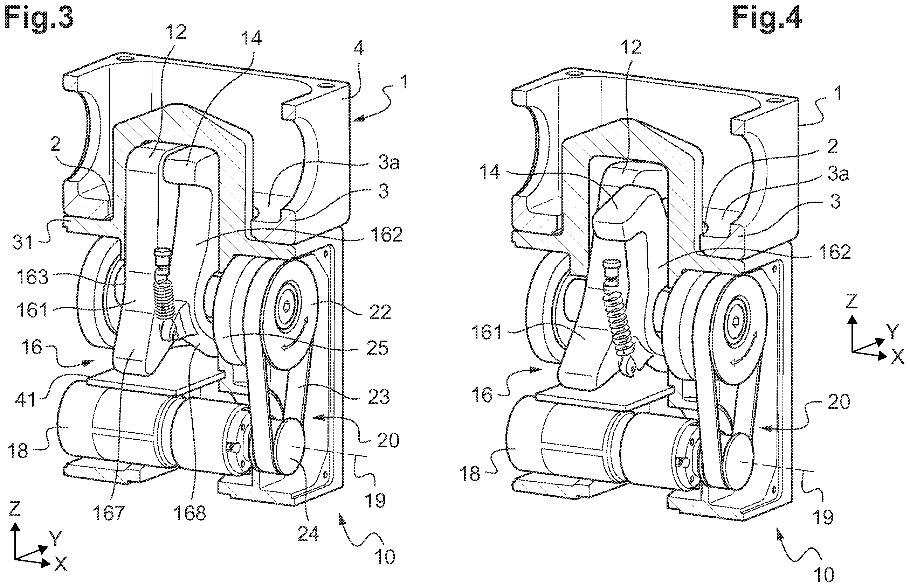

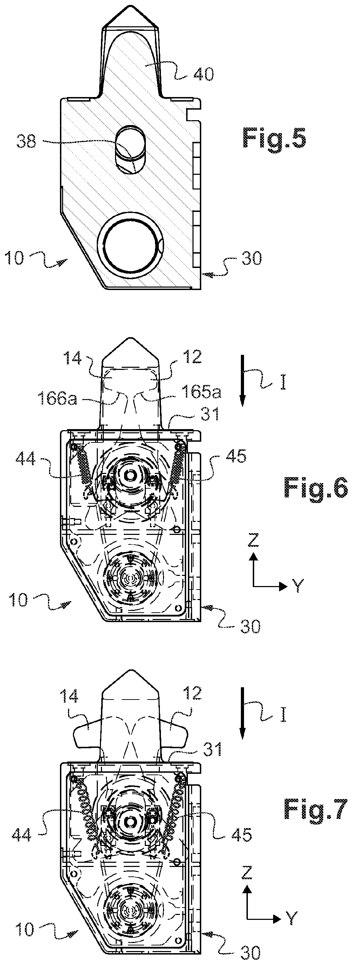

Le mécanisme de verrouillage 16 est quant à lui relié aux organes de verrouillage 12, 14, et mobile entre une première position (fig.3, 6) dans laquelle les organes de verrouillage 12, 14 sont dans la position ouverte et une deuxième position (fig. 2, 4, 7) dans laquelle les organes de verrouillage 12, 14 sont dans la position fermée.

L'actionneur 18, ici un moteur électrique rotatif, est couplé au mécanisme de verrouillage 16 par les organes de couplage 20 de sorte que, dans un mode de fonctionnement, Il coopère avec les organes de couplage 20 pour déplacer le mécanisme de verrouillage 16 de la première position vers la deuxième position au moins. Dans un tel mode de fonctionnement, l'actionneur est alimenté en énergie, ici en énergie électrique, et génère ainsi un mouvement.

Dans l'exemple représenté, dans un mode de fonctionnement, l'actionneur 18 déplace le mécanisme de verrouillage 16 de l'une à l'autre des première et deuxième positions, permettant ainsi le verrouillage et le déverrouillage du système de verrouillage 10. Dans un mode d'arrêt de l'actionneur, dans lequel l'actionneur ne peut générer de mouvement, le mécanisme de verrouillage reste alors bloqué dans la position qu'il occupe, qu'il s'agisse de la première ou de la deuxième position. Selon la nature de l'actionneur, ce mode d'arrêt peut correspondre à un mode dans lequel l'actionneur est ou n'est pas alimenté en énergie.

Le système de verrouillage 10 représenté comprend également un boîtier 30 à l'intérieur duquel sont agencés l'actionneur 18 et les organes de couplage 20. Le mécanisme de verrouillage 16 est quant à lui placé au moins en partie à l'intérieur d'un logement 32 du boîtier 30.

On notera ici que les organes de verrouillage 12, 14 font saillie d'une face supérieure 31 du boîtier sur laquelle vient reposer la paroi 3 de la ferrure 4 du conteneur à verrouiller. Cette face supérieure 31 présente une protubérance 31a protégeant les organes de verrouillage 12, 14 dans leur position ouverte. Cette protubérance 31a présente ainsi une forme similaire à une arche dont le sommet 31b présente une forme de pointe facilitant son introduction dans l'ouverture 2 de la ferrure 4. Ainsi, les organes de verrouillage 12, 14 ne font pas saillie hors de cette protubérance 31b en position ouverte. Ainsi, en position ouverte, les organes de verrouillage 12, 14 ne sont pas entièrement rétractés à l'intérieur du boîtier mais sont situés en dehors de celui-ci, protégés par la protubérance 31a.

Dans l'exemple, le boîtier 30 présente des ouvertures latérales 33, 34 (fig. 2) fermées respectivement par des plaques 35, 36 (fig.1). L'ouverture 33 permet l'accès à l'actionneur 18 alors que l'ouverture 34 permet l'accès à la fois à l'actionneur 18 et aux organes de couplage 20.

Le mécanisme de verrouillage 16 peut être agencé par rapport au boîtier 30 de manière à suivre un mouvement de translation ou de rotation entre les première et deuxième positions. Les organes de couplage 20 comprennent alors un ou plusieurs organes, notamment mécaniques, choisis parmi des organes de transmission d'un mouvement rotatif ou linéaire et des organes de transformation d'un mouvement rotatif ou linéaire en mouvement linéaire ou rotatif.

Dans l'exemple représenté, le mécanisme de verrouillage 16 comprend un mécanisme à ciseaux dans lequel deux branches 161, 162 se croisent à l'emplacement d'un pivot 163 d'axe 164 perpendiculaire à la direction d'insertion I.

Le pivot 163 est monté coulissant le long de surfaces définissant des orifices 37, 38 ménagés au travers de parois internes 39, 40. Ces parois internes définissent en partie le logement 32 du boîtier 30. Dans l'exemple représenté, ces orifices 37, 38 présentent une même forme oblongue (fig.5), le mécanisme de verrouillage 16 étant en position ouverte lorsque le pivot 163 est situé en position haute à l'intérieur de ces orifices 37, 38 (tel que représenté fig.5) et en position fermée lorsque le pivot 163 est situé en position basse.

Dans le mode de réalisation représenté, les organes de verrouillage 12, 14 sont formés par des extrémités 165, 166 des branches 161, 162 situées d'un même côté de celles-ci.

Ici, les extrémités respectives 165, 166 des branches 161, 162 présentent des surfaces 165a, 166a (fig.6) de serrage disposées sensiblement à angle droit par rapport aux branches 161, 162, dans des directions opposées. Ces surfaces de serrage 165a, 166a coopèrent avec une surface interne 3a de la paroi 3 qui entoure l'ouverture 2 (fig. 4).

Les autres extrémités 167, 168 des branches 161, 162 coopèrent avec une surface interne 41 du boîtier 30 sensiblement perpendiculaire à la direction d'insertion I. Plus précisément, ces extrémités 167, 168 des branches 161, 162 sont en contact avec la surface interne 41 et glissent sur celle-ci lorsque le mécanisme de verrouillage se déplace entre les première et deuxième positions. Cette surface interne 41 définit également en partie le logement interne 32 du boîtier recevant le mécanisme de verrouillage 16.

Le mécanisme de verrouillage 16 représenté fonctionne ainsi de la manière suivante. En position basse du pivot 163 dans les orifices 37, 38, les extrémités 167, 168 sont dans une position d'écartement maximale l'une par rapport à l'autre horizontalement. Il en est de même pour les autres extrémités 165, 166 formant les organes de verrouillage 12, 14. En outre, la hauteur totale occupée par le mécanisme de verrouillage 16 est minimale. Autrement dit, les organes de verrouillage 12, 14 sont dans une position d'écartement maximal horizontalement l'un par rapport à l'autre et dans une position d'écartement minimale (verticalement, suivant la direction d'insertion I) par rapport à la face supérieure 31 du boîtier. Dans cette position, dite position fermée, les organes de verrouillage 16 peuvent ainsi exercer une pression sur la paroi 3 en direction de la face supérieure 31 du boîtier 30. En position haute du pivot 163 dans les orifices 37, 38, les extrémités 167, 168 sont dans une position d'écartement minimale horizontalement l'une par rapport à l'autre. Il en est de même pour les autres extrémités 165, 166 formant les organes de verrouillage 12, 14 : celles-ci peuvent alors traverser l'ouverture 2 de la paroi 3. En outre, la hauteur totale occupée par le mécanisme de verrouillage 16 est maximale. Autrement dit, les organes de verrouillage 12, 14 sont dans une position d'écartement minimal horizontalement l'un par rapport à l'autre et dans une position d'écartement maximale (suivant la direction d'insertion I) par rapport à la face supérieure 31 du boîtier. Dans cette position, dite position ouverte, les organes de verrouillage 16 libèrent la paroi 3 de la ferrure 4 du conteneur qui peut être ôté.

Dans le présent exemple, l'actionneur 18 est placé à l'intérieur du boîtier 30 sous le logement 32 recevant en partie le mécanisme de verrouillage 16, son axe de rotation 19 étant parallèle à l'axe 164 du pivot 163.

Un mode de réalisation des organes de couplage 20 est maintenant décrit en référence aux figures 2 à 4. Ces organes de couplage 20 sont ici agencés pour transformer le mouvement rotatif de l'actionneur 18 en un mouvement linéaire et transmettre ce dernier au pivot 163 afin de le déplacer à l'intérieur des orifices 37, 38.

A cet effet, il est prévu une roue excentrique 21 recevant une extrémité du pivot 163 et fixée rigidement à ce dernier. Cette roue excentrique 21 est fixée rigidement à une poulie excentrique 22 sur laquelle est montée une courroie 23. Une autre poulie 24 entrainée en rotation par l'actionneur 18 est disposée sous la poulie excentrique 22, verticalement. Ainsi, l'actionneur 18 entraîne en rotation la poulie 24. Le mouvement de rotation de la poulie 24 est transmis par la courroie 23 à la poulie excentrique 22 et solidairement à la roue excentrique 21 provoquant la translation du pivot 163 à l'intérieur des orifices oblongs 37, 38. Ainsi, durant le déplacement du pivot 163 entre ses positions extrêmes, la poulie excentrique 22 et la roue excentrique 21 se déplacent latéralement suivant une direction perpendiculaire à l'axe 164 du pivot 163 et à la direction d'introduction I. On notera que la poulie excentrique 22 est en permanence en appui contre une surface interne 43 du boitier 30, ici une surface horizontale située du côté des organes de verrouillage 12, 14 par rapport au pivot, ce qui favorise sa stabilité.

Afin de stabiliser le déplacement du pivot 163, la roue excentrique 21 peut être montée à l'intérieur d'un palier 25, également en appui contre la surface interne 43 du boîtier. Pour davantage de stabilité, l'autre extrémité du pivot 163 est fixée à une autre roue excentrique 21' montée à l'intérieur d'un palier 25' également en appui contre la surface interne 43, les deux ensembles de roues excentrique/palier étant identiques. On notera dans l'exemple que les éléments 21 à 25 sont situés d'un côté du logement 32, les éléments 21', 25' étant situés de l'autre côté du logement 32 suivant la direction de l'axe 164 du pivot. Notamment, les éléments 21', 25' d'une part et 21, 25 sont disposés symétriquement par rapport à un plan (Z, Y) médian du pivot 163.

Ce mode de réalisation présente l'avantage d'être simple à réaliser et mettre en oeuvre et de permettre une réalisation compacte du système de verrouillage. En outre, en cas de panne de l'actionneur et de défaut d'alimentation en énergie, il est possible d'accéder à la courroie 23 via l'ouverture 34. On comprend alors que l'on peut actionner manuellement ou via un outil la poulie excentrique 22 afin de verrouiller/déverrouiller le système de verrouillage. Ce mode de réalisation est également avantageux car la force exercée par le système de verrouillage sur l'ouverture augmente progressivement jusqu'à ce que les forces contraires soient élevées (appui des organes de verrouillage sur le pourtour de l'ouverture). De plus, ces forces sont réglables, en particulier lors de l'utilisation d'un actionneur électrique.

De manière générale, le mécanisme de verrouillage peut présenter des organes de sollicitation sollicitant le mécanisme de verrouillage vers la première position. Dans l'exemple, il s'agit de deux ressorts 44, 45 (fig.6) reliant chacun une extrémité 167, 168 d'une branche 161, 162 à une surface interne du boîtier 30, ici la surface interne 43 laquelle forme la surface interne de la paroi supérieure 31.

De manière générale, on notera que l'utilisation d'un actionneur électrique, tel qu'un moteur électrique, permet de maintenir de manière sûre les organes de verrouillage dans leur position fermée, notamment lorsqu'un tel actionneur n'est plus alimenté en électricité. Ceci permet de s'affranchir d'un système de blocage mécanique qui peut se rompre.

L'invention n'est pas limitée au mode de réalisation particulier décrit en référence aux figures. Par exemple, le pivot 163 peut être déplacé suivant un mouvement en rotatif : les orifices 37, 38 peuvent alors présenter une forme circulaire ou annulaire pour guider le pivot. On peut également envisager d'autres systèmes de transmission/transformation du mouvement que le système décrit comportant des poulies excentriques ou non et une transmission par courroie. Notamment tout type de transmission/transformation mécanique peut être envisagé. Enfin, l'actionneur 18 pourrait être un actionneur rotatif hydraulique ou pneumatique, bien qu'un actionneur électrique soit préféré. Il pourrait également s'agir d'un actionneur linéaire, d'axe également parallèle à l'axe du pivot ou bien d'axe perpendiculaire au pivot. Les organes de couplage pourraient alors être de simples logements de réception du pivot solidaire de l'arbre de l'actionneur. On notera que deux actionneurs linéaires pourraient être prévus coopérant chacun avec une extrémité du pivot 163.

La figure 8 représente enfin un exemple de véhicule automobile 50 comportant un plateau de chargement 51 et une source d'énergie 52, ici une batterie électrique. Plusieurs systèmes de verrouillage 10 sont fixés sur le plateau 51, par exemple par vissage : il est ainsi possible de démonter les systèmes de verrouillage et/ou de les positionner en différents endroits du plateau, par exemple quand ils sont destinés à verrouiller des conteneurs de dimensions différentes. L'actionneur 18 de chaque système de verrouillage 10 est alimenté en énergie par la batterie 52 au moyen de câbles 53, par exemple incorporés au plateau 51 ou fixés sur ou sous ce dernier. Un système de commande 54 permet de commander les actionneurs 18 des systèmes de verrouillage 10 et de commander ainsi le verrouillage/déverrouillage des systèmes de verrouillage. Ce système de commande 54 peut être relié par des câbles aux systèmes de verrouillage et/ou à la source d'énergie. Il peut alors être disposé à l'intérieur de l'habitacle du véhicule, par exemple dans le poste de conduite. Le système de commande 54 peut aussi être relié par des moyens de communication sans fil (par ondes radios ou autre) aux systèmes de verrouillage et/ou à la source d'énergie, tel que représenté sur la figure. Le système de commande 54 comporte ainsi une interface qui peut être fixe sur le véhicule, par exemple intégrée au tableau de bord du poste de conduite du véhicule ou située à proximité du plateau arrière du véhicule sur lequel le conteneur est installé. Dans un autre cas, l'interface peut être constituée par une télécommande, un téléphone, une tablette ou un ordinateur distant, communiquant par ondes selon les normes standards en vigueur (Bluetooth, RFID, Wifi, etc.).

On peut également prévoir d'équiper chaque système de verrouillage d'un capteur de position des organes de verrouillage, un tel capteur permettant de vérifier si les organes de verrouillage sont en position ouverte ou fermée. Par exemple, le capteur de position peut détecter une position ouverte, une position fermée ou chacune des positions. Chaque capteur peut avantageusement être relié à un système de commande du véhicule, notamment commandant le démarrage du véhicule. Ce système de commande peut être configuré pour interdire le démarrage du véhicule lorsqu'un capteur indique qu'un système de verrouillage est dans une position ouverte (ou n'est pas dans une position fermée), évitant ainsi tout risque de déplacement du véhicule alors qu'un système embarqué n'est pas correctement fixé. On obtient ainsi un verrouillage automatique et sécurisé d'un système embarqué sur un véhicule.

## Revendications

1. Système de verrouillage (10) pour le verrouillage d'une ferrure d'un système embarqué, notamment un conteneur (1), comprenant :
- des organes de verrouillage (12, 14) déplaçables entre une position ouverte dans laquelle ils peuvent traverser librement une ouverture (2) d'une paroi (3) de la ferrure du système embarqué (1) suivant une direction d'insertion et une position fermée dans laquelle ils sont verrouillés par rapport à l'ouverture (2),
- un mécanisme de verrouillage (16) relié aux organes de verrouillage (12, 14), mobile entre une première position dans laquelle les organes de verrouillage (12, 14) sont dans la position ouverte et une deuxième position dans laquelle les organes de verrouillage (12, 14) sont dans la position fermée, **caractérisé en ce qu'**il comprend au moins un actionneur (18) et des organes de couplage (20) couplant ledit au moins un actionneur (18) au mécanisme de verrouillage (16) de sorte que, dans un mode de fonctionnement, l'actionneur (18) coopère avec les organes de couplage (20) pour déplacer le mécanisme de verrouillage au moins de la première position vers la deuxième position, optionnellement de la deuxième position vers la première position, et **en ce que** l'actionneur (18) étant un actionneur électrique, dans au moins un mode d'arrêt, l'actionneur (18) coopère avec les organes de couplage (20) pour bloquer le mécanisme de verrouillage (16) dans une moins une position choisie parmi les première et deuxième positions.

2. Système de verrouillage (10) selon la revendication 1, **caractérisé en ce qu'**il comprend en outre un boîtier (30) à l'intérieur duquel sont agencés l'actionneur (18) et les organes de couplage (20), le mécanisme de verrouillage (16) étant placé au moins en partie à l'intérieur d'un logement (32) du boîtier (30).

3. Système de verrouillage (10) selon la revendication 2, **caractérisé en ce que** le boîtier (30) présente au moins une ouverture (33, 34) située en regard d'au moins un élément choisi parmi les organes de couplage (20) et l'actionneur (18).

4. Système de verrouillage (10) selon l'une des revendications 2 ou 3, **caractérisé en ce que** le mécanisme de verrouillage (16) est agencé par rapport au boîtier (30) de manière à suivre un mouvement de translation ou de rotation entre les première et deuxième positions et **en ce que** les organes de couplage (20) comprennent un ou plusieurs organes, notamment mécaniques, choisis parmi des organes de transmission d'un mouvement rotatif ou linéaire et des organes de transformation d'un mouvement rotatif ou linéaire en mouvement linéaire ou rotatif.

5. Système de verrouillage (10) selon l'une quelconque des revendications 2 à 4, **caractérisé en ce que** le mécanisme de verrouillage (16) comprend un mécanisme à ciseaux dans lequel deux branches (161, 162) se croisent à l'emplacement d'un pivot (163) d'axe (164) perpendiculaire à la direction d'insertion, le mécanisme de verrouillage (16) coopérant avec au moins une surface (37, 38, 41, 43) du logement (32) du boîtier de sorte que lors d'un déplacement entre les première et deuxième positions, le pivot (163), couplé à l'actionneur par les organes de couplage, suive par rapport au boîtier un mouvement choisi parmi une translation et une rotation.

6. Système de verrouillage (10) selon la revendication 5, **caractérisé en ce qu'**il comprend un unique actionneur rotatif (18) dont l'axe de rotation (19) s'étend parallèlement à l'axe (164) du pivot.

7. Système de verrouillage (10) selon la revendication 6, caractérisé en ce l'actionneur est couplé au pivot par un système de poulie-courroie et de roues et poulies excentriques.

8. Véhicule automobile (50) comportant un plateau de chargement (51), au moins une source d'énergie (52) et au moins un système de verrouillage (10) selon l'une quelconque des revendications 1 à 7 solidaire du plateau, l'actionneur (18) de chaque système de verrouillage (10) étant alimenté en énergie par ladite au moins une source d'énergie.

9. Véhicule automobile (50) selon la revendication 8 comprenant au moins un système de commande (54) dudit au moins un système de verrouillage (10), notamment distant de ce dernier.

10. Véhicule automobile (50) selon la revendication 8 ou 9, dans lequel chaque système de verrouillage (10) est fixé au plateau (51) de manière démontable.

11. Véhicule automobile (50) selon l'une quelconque des revendications 8 à 10, comprenant au moins un capteur de détection de la position des organes de verrouillage de chaque système de verrouillage relié à un système de commande du véhicule, le système de commande du véhicule étant configuré pour interdire le démarrage du véhicule lorsqu'un capteur indique qu'un système de verrouillage est dans une position ouverte ou n'est pas dans une position fermée.

## Patentansprüche

1. Verriegelungssystem (10) zum Verriegeln eines Beschlages eines bordeigenen Systems, insbesondere eines Behälters (1), umfassend:
- Verriegelungsorgane (12, 14), die zwischen einer offenen Position, in der sie eine Öffnung (2) einer Wand (3) des Beschlages des bordeigenen Systems (1) in einer Einführrichtung frei durchqueren können, und einer geschlossenen Position, in der sie in Bezug auf die Öffnung (2) verriegelt sind, verschiebbar sind,
- einen Verriegelungsmechanismus (16), der mit den Verriegelungsorganen (12, 14) verbunden ist, der zwischen einer ersten Position, in der die Verriegelungsorgane (12, 14) in der offenen Position sind, und einer zweiten Position, in der die Verriegelungsorgane (12, 14), in der geschlossenen Position sind, beweglich ist,
**dadurch gekennzeichnet, dass** es mindestens einen Stellantrieb (18) und Kopplungsorgane (20) umfasst, die den mindestens einen Stellantrieb (18) mit dem Verriegelungsmechanismus (16) koppeln, sodass der Stellantrieb (18) in einem Betriebsmodus mit den Kopplungsorganen (20) zusammenwirkt, um den Verriegelungsmechanismus mindestens von der ersten Position in die zweite Position, optional von der zweiten Position in die erste Position zu verschieben, und dadurch, dass, da der Stellantrieb (18) ein elektrischer Stellantrieb ist, der Stellantrieb (18) in mindestens einem Abschaltmodus mit den Kopplungsorganen (20) zusammenwirkt, um den Verriegelungsmechanismus (16) in mindestens einer Position zu blockieren, die aus der ersten und zweiten Position ausgewählt wird.

2. Verriegelungssystem (10) nach Anspruch 1, **dadurch gekennzeichnet, dass** es weiter ein Gehäuse (30) umfasst, in dessen Inneren der Stellantrieb (18) und die Kopplungsorgane (20) angeordnet sind, wobei der Verriegelungsmechanismus (16) mindestens teilweise im Inneren einer Aufnahme (32) des Gehäuses (30) platziert ist.

3. Verriegelungssystem (10) nach Anspruch 2, **dadurch gekennzeichnet, dass** das Gehäuse (30) mindestens eine Öffnung (33, 34) aufweist, die sich gegenüber mindestens einem Element befindet, das aus den Kopplungsorganen (20) und dem Stellantrieb (18) ausgewählt wird.

4. Verriegelungssystem (10) nach einem der Ansprüche 2 oder 3, **dadurch gekennzeichnet, dass** der Verriegelungsmechanismus (16) in Bezug auf das Gehäuse (30) angeordnet ist, um einer Translations- oder Drehbewegung zwischen der ersten und zweiten Position zu folgen, und dadurch, dass die Kopplungsorgane (20) ein oder mehrere, insbesondere mechanische, Organe umfassen, die aus Organen zum Übertragen einer drehenden oder linearen Bewegung und Organen zum Umwandeln einer drehenden oder linearen Bewegung in eine lineare oder drehende Bewegung ausgewählt werden.

5. Verriegelungssystem (10) nach einem der Ansprüche 2 bis 4, **dadurch gekennzeichnet, dass** der Verriegelungsmechanismus (16) einen Scherenmechanismus umfasst, bei dem sich die beiden Schenkel (161, 162) an der Stelle eines Drehpunktes (163) einer Achse (164) senkrecht zur Einführrichtung kreuzen, wobei der Verriegelungsmechanismus (16) mit mindestens einer Oberfläche (37, 38, 41, 43) der Aufnahme (32) des Gehäuses zusammenwirkt, sodass der durch die Kopplungsorgane an den Stellantrieb gekoppelte Drehpunkt (163) bei einer Verschiebung zwischen der ersten und zweiten Position in Bezug auf das Gehäuse einer Bewegung folgt, die aus einer Translation und einer Drehung ausgewählt ist.

6. Verriegelungssystem (10) nach Anspruch 5, **dadurch gekennzeichnet, dass** es einen einzigen Drehstellantrieb (18) umfasst, dessen Drehachse (19) sich parallel zur Achse (164) des Drehpunktes erstreckt.

7. Verriegelungssystem (10) nach Anspruch 6, **dadurch gekennzeichnet, dass** der Stellantrieb durch ein System aus Scheibe-Riemen und Exzenter-Rädern und -Scheiben mit dem Drehpunkt gekoppelt ist.

8. Kraftfahrzeug (50), welches eine Ladefläche (51), mindestens eine Energiequelle (52) und mindestens ein Verriegelungssystem (10) nach einem der Ansprüche 1 bis 7 beinhaltet, das fest mit der Fläche verbunden ist, wobei der Stellantrieb (18) eines jeden Verriegelungssystems (10) von der mindestens einen Energiequelle mit Energie versorgt wird.

9. Kraftfahrzeug (50) nach Anspruch 8, welches mindestens ein Steuerungssystem (54) des mindestens einen Verriegelungssystems (10), insbesondere von diesem beabstandet umfasst.

10. Kraftfahrzeug (50) nach Anspruch 8 oder 9, wobei jedes Verriegelungssystem (10) abnehmbar an der Fläche (51) befestigt ist.

11. Kraftfahrzeug (50) nach einem der Ansprüche 8 bis 10, welches mindestens einen Sensor zum Erkennen der Position der Verriegelungsorgane eines jeden Verriegelungssystems umfasst, das mit einem Steuerungssystem des Fahrzeugs verbunden ist, wobei das Steuerungssystem des Fahrzeugs konfiguriert ist, um das Starten des Fahrzeugs zu untersagen, wenn ein Sensor angibt, dass ein Verriegelungssystem in einer offenen Position ist oder nicht in einer geschlossenen Position ist.

## Claims

1. Locking system (10) for locking a fitting of an on-board system, in particular a container (1), comprising:
- locking members (12, 14) movable between an open position in which they can freely pass through an opening (2) in a wall (3) of the fitting of the on-board system (1) in an insertion direction and a closed position in which they are locked with respect to the opening (2),
- a locking mechanism (16) connected to the locking members (12, 14), movable between a first position in which the locking members (12, 14) are in the open position and a second position in which the locking members (12, 14) are in the closed position, **characterised in that** it comprises at least one actuator (18) and coupling members (20) coupling said at least one actuator (18) to the locking mechanism (16) so that, in an operating mode, the actuator (18) cooperates with the coupling members (20) in order to move the locking mechanism at least from the first position to the second position, optionally from the second position to the first position, and **in that**, the actuator (18) being an electric actuator, in at least one stop mode the actuator (18) cooperates with the coupling members (20) to block the locking mechanism (16) in at least one position selected from the first and second positions.

2. Locking system (10) according to claim 1, **characterised in that** it further comprises a casing (30) inside which the actuator (18) and the coupling members (20) are arranged, the locking mechanism (16) being placed at least partly inside a housing (32) of the casing (30).

3. Locking system (10) according to claim 2, **characterised in that** the casing (30) has at least one opening (33, 34) located facing at least one element selected from the coupling members (20) and the actuator (18).

4. Locking system (10) according to one of claims 2 or 3, **characterised in that** the locking mechanism (16) is arranged with respect to the casing (30) so as to follow a translation or rotation movement between the first and second positions and **in that** the coupling members (20) comprise one or more members, in particular mechanical, selected from members for transmitting a rotary or linear movement and members for transforming a rotary or linear movement into a linear or rotary movement.

5. Locking system (10) according to any one of claims 2 to 4, **characterised in that** the locking mechanism (16) comprises a scissor mechanism in which two arms (161, 162) cross at the location of a pivot (163) with its axis (164) perpendicular to the insertion direction, the locking mechanism (16) cooperating with at least one surface (37, 38, 41, 43) of the housing (32) of the casing so that, during a movement between the first and second positions, the pivot (163), coupled to the actuator by the coupling members, follows with respect to the casing a movement selected from a translation and a rotation.

6. Locking system (10) according to claim 5, **characterised in that** it comprises a single rotary actuator (18) the rotation axis (19) of which extends parallel to the axis (164) of the pivot.

7. Locking system (10) according to claim 6, **characterised in that** the actuator is coupled to the pivot by a pulley-belt system and eccentric wheels and pulleys.

8. Motor vehicle (50) including a loading platform (51), at least one energy source (52) and at least one locking system (10) according to any one of claims 1 to 7 secured to the platform, the actuator (18) of each locking system (10) being supplied with energy by said at least one energy source..

9. Motor vehicle (50) according to claim 8, comprising at least one system (54) for controlling said at least one locking system (10), in particular distant from the latter.

10. Motor vehicle (50) according to claim 8 or 9, wherein each locking system (10) is attached to the platform (51) demontably.

11. Motor vehicle (50) according to any one of claims 8 to 10, comprising at least one sensor for detecting the position of the locking members of each locking system connected to a control system of the vehicle, the control system of the vehicle being configured to prevent the starting of the vehicle when a sensor indicates that a locking system is in an open position or is not in a closed position.
